# EUROPEAN PATENT SPECIFICATION

(11) **EP 2 580 035 B1**
(45) Date of publication and mention of the grant of the patent: **09.08.2017**
(21) Application number: 11726231.1
(22) Date of filing: 10.06.2011
(51) Int. Cl.: B27M 3/00, C09J 5/00

(54) **A METHOD FOR JOINING AT LEAST TWO ELEMENTS AND AN ASSEMBLY**
VERFAHREN ZUR VERBINDUNG VON MINDESTENS ZWEI ELEMENTEN UND EINE ANORDNUNG
PROCÉDÉ DE RACCORDEMENT D'AU MOINS DEUX ÉLÉMENTS ET ENSEMBLE

(30) Priority: 14.06.2010 EP 10165866
(43) Date of publication of application: 17.04.2013
(73) Proprietor: Nederlandse Organisatie voor toegepast- natuurwetenschappelijk onderzoek TNO, 2595 DA 's-Gravenhage (NL)
(72) Inventor: BOTTER, Hendrik, NL-2628 VK Delft (NL); HOMAN, Waldemar Jozef, NL-2628 VK Delft (NL)
(74) Representative: V.O.
(86) International application number: PCT/NL2011/050425
(87) International publication number: WO 2011/159151

(56) References cited:
- EP-A1- 2 255 954
- EP-A2- 1 074 666
- EP-A2- 2 292 709
- WO-A1-2005/017006
- US-A- 4 061 620
- Holzland GmbH: "Elegante Konsole für TV, DVD & Co.", Holzland Holzfachhandel, Bauanleitung , 6 October 2009 (2009-10-06), XP002660766, Retrieved from the Internet: URL:http://web.archive.org/web/20091006095 952/http://www.holzland.de/anleitungen/moe bel-regale-incl-badmoebel/elegante-konsole -fuer-tv-dvd-amp-co/ [retrieved on 2011-10-07]
- Wikipedia: "Palygorskite", Wikipedia, the free encyclopedia , 13 September 2011 (2011-09-13), XP002660786, Retrieved from the Internet: URL:http://en.wikipedia.org/wiki/Palygorsk ite [retrieved on 2011-10-07]

## Description

The present method relates to a method for joining at least two elements, for example freshly cut (i.e. relatively wet) solid wood parts, the elements having at least partly mating contact surfaces that are to be connected to each other, wherein a curable adhesive is applied to secure the contact surfaces to each other.

Such a method is commonly known from the prior art. For example, in a known method, wooden elements are connected to each other using finger joints. Such joints usually include opposite mating profiles, providing mating projections and cavities there-between, which are glued with respective contact surfaces to each other. Usually, during production, the elements are pressed onto each other and transported to another processing station. The resulting connections are relatively strong and durable.

The pressing together of the elements that are to be joined has the disadvantage that it usually requires the use of a dedicated pressure application system. However, the uncured glue as such can have a lubricating effect, such that the elements slide apart in case pressure or clamping force is relieved too soon. Thus, the pressure will have to be maintained for a relatively long period of time before the joined elements can safely be removed from the pressure application system.

As a result, the processing of large quantities of joints will require a relatively large amount of processing time of such a system. In some applications, speeding up the curing of glue can be achieved, for example under the influence of radiation (for example microwave or high frequency radiation) and/or heat, and depending on the type of adhesive. However, such treatment is not always possible, for example due to certain limitations relating to the elements material, their dimensions and/or other factors, and/or due to a desired type of adhesive for connecting the elements. In such cases, for example, relatively slow adhesive curing can be desired in order to achieve best bond properties.

US 3,888,715 discloses a process of bonding members with a thermosetting adhesive in a heat generating, dielectric, radio frequency field, providing faster cures. According to column 8 of the publication, discrete particles can be used in the heating pattern, wherein the particles also provide a porous and discontinuous deposit which does not interfere with bonding. Figure 24 of the publication shows boards 170, 171 to be joined by a finger joint 172, wherein a conductive field control pattern of parallel stripes 173 is placed on the surface of one of the finger joints.

US2006/0060296 relates to conductive adhesive bonding. In the bonding process, surfaces are coated with adhesive that is filled with conductive metallic particles, pressed together and an electric current is passed between them to momentarily melt conductive particles. The molten droplets agglomerate and wet the facing surfaces. When the molten clusters re-solidify, electrically conductive paths are formed between the workpieces.

US 6,146,488 relates to a weld bonding method.

The present invention aims to solve or at least alleviate the problems of the known methods. Particularly, the invention aims to provide an improved method for joining elements, wherein a durable joint can be obtained in an efficient manner. More particularly, it is desired to provide a method, wherein elements can be joined without having to provide for long pressure application times, and for example allowing relatively long curing periods.

To this aim, advantageously, the method according to the invention is characterised by the features of claim 1.

According to an aspect of the invention, friction enhancing means are applied between said contact surfaces for enhancing friction, wherein the friction enhancing means include rigid locking elements, the rigid locking elements including rigid particles, wherein at least some of the rigid locking elements are forced into at least one contact surface by pressing the contact surfaces together.

As a result, the elements, that are to be joined, can simply be held in a joined position using friction enhancing means enhancing friction between the contact surfaces (for example by locking the elements to each other at/along the contact surfaces, and before curing of the adhesive). The friction enhancing means can act as slide prevention means, preventing the joined elements sliding away from each other (before the adhesive has been cured). For example, a clamping force or pressure for joining the elements can be released swiftly, when the elements are held in said joined position. Particularly, the friction enhancing means are used to assist the curable adhesive in connecting the elements together.

For example, in a further elaboration of the invention, the friction enhancing means can lock the two elements when they have been joined with each other (with respective contact surfaces being in suitable connecting positions). In that case, the friction enhancing means are locking means. The locking allows curing of the adhesive without having to apply external pressure onto the elements during a (subsequent) curing period. Thus, the curing of the adhesive (having been applied to the elements) can be carried out at another location than a location where the elements are initially joined to each other. As a result, a prolonged use of a pressure application system pressing the parts together can be avoided. Also, as a result, relatively long curing periods can be used, for example allowing the adhesive to cure in a natural manner without application of external pressure and/or curing radiation treatment.

It has particularly been found that application of locking elements, at least some of the locking elements being forced into the contact surfaces, provides a very reliable anchoring of the elements that are to be joined, before the adhesive has developed handling strength. Also, it has been found that such locking elements can be broadly applied, with many different types of adhesive and many different types of elements and element materials. In fact, locking elements can be selected such that they do not change or reduce desired mechanical and chemical properties of the adhesive that is to be used. Said locking elements are rigid (and for example massive) locking elements.

In a preferred embodiment, the locking elements are applied after the adhesive has been applied to one or both of the contact surfaces. Thus, the locking elements and the adhesive can be supplied separately from each other (without being mixed prior to application). This provides significant advantages regarding supply and storage of these components (avoiding mixing related segregation problems), and regarding the adhesive application process (an adhesive applicator does not have to be specifically adapted for handling application of the locking elements).

The friction enhancing means can have various configurations. According to a further embodiment, for example, the friction enhancing means can be friction enhancing elements, enhancing friction between abutting surfaces of the elements to be joined (preventing the surfaces sliding apart from one another), preferably by reaching at least partly into at least one contact surface, for example into both contact surfaces.

Also, an aspect of the invention provides an assembly of at least two elements, for example provided by a method according to the invention, wherein the assembly is characterised by the features of claim 13.

Further advantageous embodiments of the invention are described in the dependent claims. These and other aspects of the invention will be apparent from and elucidated with reference to non-limiting embodiments described hereafter, shown in the drawings.
Figure 1 depicts a plan view of an assembly of joined elements according to a non-limiting embodiment of the invention;
Figure 2 depicts a cross-section over line II-II of Fig. 1;
Figure 3 depicts a detail Q of Fig. 2;
Figure 4 schematically shows an apparatus for pressing parts together;
Figure 5 is similar to Fig. 3, depicting part of a second embodiment; and
Figure 6 is similar to Fig. 3, depicting part of a third embodiment.

Similar or corresponding features are denoted by similar or corresponding reference signs in this application.

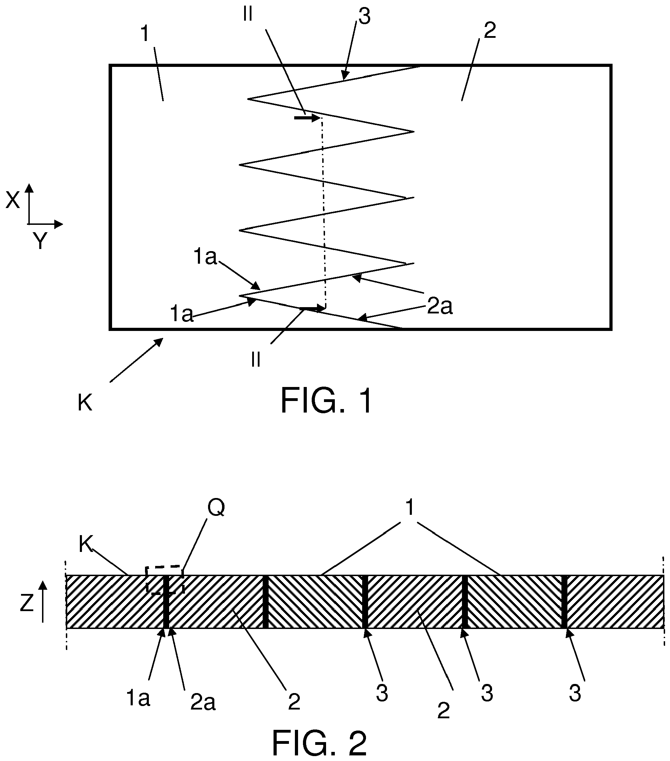

Figures 1-3 depict a non-limiting first embodiment of an assembly K of, in this case, two elements 1, 2 that have been connected to each other along opposite contact surfaces 1a, 2a. Particularly, adhesive 3 has been applied between the contact surfaces (serving as bonding surfaces) to hold the elements 1, 2 together after curing. According to a further embodiment (not depicted), the element K can be made of more than two parts, wherein all the parts are joined via respective glue layers between respective contact surfaces.

Each of the elements 1, 2 as such can have various shapes and dimensions, as will be appreciated by the skilled person. Also, the elements 1, 2 can have the same dimensions, or they can have mutually different dimensions. For example, the elements 1, 2 can be solid, massive elements, for example having closed (for example smooth) contact surfaces facing each other.

In the present embodiment, the elements 1, 2 are beams, plates or sheets 1, 2, which form a composite rectangular element K (having a thickness measured in a Z-direction that is relatively small compared to dimensions measured in other orthogonal directions X, Y). The elements 1, 2 can also be dimensioned differently. The composite element K can have various shapes, for example straight, curved, rectangular (as in Fig. 1), square, convex, concave, elongated, beam- or rodlike, and a combination of these and/or other shapes, as will be appreciated by the skilled person.

A resulting structure K can be used in an advantageous manner in/as construction element. The assembly (i.e. a composite element) K can comprise or be used to provide, for instance, plate material, a wall, laminate, a sandwich construction, a construction block, a construction beam, a door, a window, a window casings, ceiling parts, board, a floor part, a roof box and/or the like.

For example, the assembly K can be relatively large, made of relatively large massive components 1, 2 (this contrary to, for example, composites that are made of fiber reinforced of wood chips material). As a non-limiting example, each of elements 1, 2 can have a length, measured along a first orthogonal direction X, of at least 1 cm, particularly at least 10 cm, for example 0.5 meter or more. Also, each of the elements 1, 2 can have a width, measured along a second orthogonal direction Y, of at least 1 cm, particularly at least 10 cm, for example 0.5 meter or more. A thickness measured along a third orthogonal direction Z, of each element 1, 2 can be at least circa 1 mm, for example at least 1 cm, or a different thickness.

Various types of adhesive 3 can be applied. Depending on the elements used, good results can be obtained with adhesive that is or contains a curable epoxy resin, and alternatively with adhesive that is or contains a curable polyurethane adhesive. Also, for example, the adhesive can be of a phenol formaldehyde type, or a resorcinol formaldehyde, or a phenolresorcinol formaldehyde type. Other examples of suitable adhesives are or include: ureum formaldehyde, melamine, melamine formaldehyde, melamine ureum formaldehyde, melamine ureum phenol formaldehyde, isocyanate (PDMI), ethylene vinyl acetate (EVA), polyvinylacetate (PVAc), acrylate, cyanoacrylate, methylemethacrylate, silicones, and Modified Silane or Modified Silyl polymers.

Each of the elements 1, 2 can be made of various materials. The elements 1, 2 can be made of the same material, but that is not essential. Good results have been achieved in case each element 1, 2 is made of wood (i.e. each element is a lignocellulosic part). According to a further embodiment, each of the parts 1, 2 is made of hardwood, for example having a dry wood density of at least 800 kg/m³ or having a different (lower) dry wood density.

Also, good results have been achieved when the elements 1, 2 are relatively wet wooden parts, for example freshly cut hardwood (i.e. lignocellulosic elements having a dry wood density of at least 800 kg/m³ and having a water content of for example 25 w% or more). In case of joining wet (for example wooden) elements 1, 2, preferably, an adhesive 3 is used that can cure and connect such elements 1, 2, for example (but not limited to) a curable epoxy resin glue 3, and alternatively with a curable polyurethane adhesive 3.

Alternatively, one or both parts 1, 2 can be (a) plastic, fibre reinforced plastic, metal, rubber, concrete, stone, brick, or ceramics part(s). Other materials can be applied as well.

The mating contact surfaces of the elements 1, 2 can have various configurations, as will be clear to the skilled person. The contact surfaces can be fully mating (as in Fig 1), or partly mating (for example in case voids are present between the surfaces, after having joined the two elements 1, 2).

In the present example, the mating contact surfaces are provided by mating projections (i.e. convex parts) and cavities (i.e. concave parts) of the opposite sides of the elements 1, 2. In this example, each of the elements 1, 2 includes a plurality of such projections and cavities, at least partly engaging each other when the elements 1, 2 have been joined. Alternatively, a single projection and mating cavity can be provided to define a single mating contact surface between the two elements 1, 2 that are to be joined.

More particularly, in the present example, the mating projections and cavities of the elements 1, 2 define a finger joint structure, in this case having tapered contact surfaces (with V-shaped cross-sections, as follows from Fig. 1). Each contact surface can also be shaped differently, for example substantially conical, frusco-conical, wedge-shaped, U-shaped (in cross-section), cup-cone shaped, a combination of such shapes and/or differently shaped.

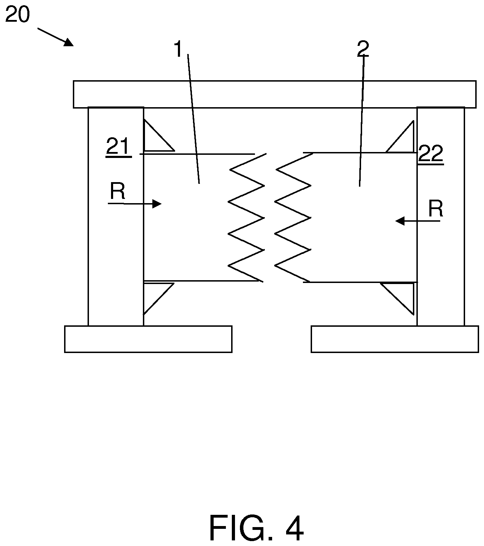

Figure 4 depicts a non-limiting example of a (preferably automated) positioning system 20 that is configured to hold or support the elements 1, 2, and to press the elements 1, 2 with the contact surfaces towards each other, for joining the elements 1, 2. For example, the system 20 can include two supports 21, 22 to hold the parts 1, 2, wherein the system 20 can move the supports 21, 22 towards each other and away from each other. The system 20 can include a glue application device that is configured to apply the curable adhesive 3 (usually being in a liquid -i.e. wet- state before curing) to one or both of the bonding surfaces 1a, 2a, before the surfaces 1a, 2a are moved towards each other. The applied adhesive can be pressed and spread between the contact surfaces 1a, 2a when the elements 1, 2 are joined by the system 20, thereby forming a relatively thin curable bonding layer for bonding the surfaces 1a, 2a.

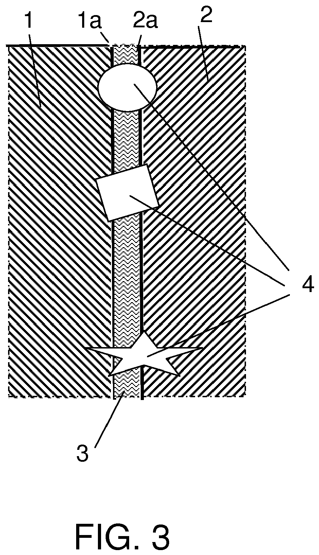

According to a preferred embodiment, the elements 1, 2 are joined by a method (for example using the system 20 shown in Fig. 4), wherein the curable adhesive 3 is applied between the respective contact surfaces to secure the contact surfaces 1a, 2a to each other, wherein friction enhancing means 4 are applied between said contact surfaces as well, for enhancing friction after application (and during curing) of the adhesive 3. Examples of embodiments of such friction enhancing means 4 are shown in the detail of Fig. 3.

The friction enhancing means 4 (which differ from the adhesive, i.e. are not the curable adhesive 3) can have various configurations. Good results have been achieved by friction enhancing means 4 that provide a clamping or locking engagement between the elements 1, 2, at the contact surfaces 1a, 2a, thereby holding the elements 1, 2 together at the opposite contact surfaces (and preventing the surfaces to slide away from each other). Thus, any subsequent application of external pressure to hold the elements 1, 2 together during curing of the adhesive can be reduced or avoided. As a result, the elements 1, 2 can be transported to another location (for example away from a joining/pressing system 20), to be processed further. Various subsequent processing steps can be carried out, for example (but not limited to) a curing and/or drying step, coating, impregnation, cutting, sawing, and the-like.

In the present first embodiment, rigid, massive, friction enhancing means 4 are applied between the contact surfaces 1a, 2a for mechanically locking the main elements 1, 2 to each other (the respective friction enhancing means can then be called 'locking means' or 'blocking means'). For example, the friction enhancing means can include relatively small rigid locking elements 4, for example rigid particles, beads. Particularly, at least one of the contact surfaces 1a, 2a can be provided with a layer of a plurality of such friction enhancing mean 4, to lock the elements 1, 2 to each other during a pressing step. The rigid locking elements 4 can remain rigid during the joining of the elements 1, 2, i.e. during pressing the elements 1, 2 with their contact surfaces towards each other (and during curing of the adhesive).

The rigid locking elements 4 can be made of various materials, for example rigid lignocellulosic material, for example hardwood material, metal, alloy, stone or stone-like material, for example sand, or any combination of such materials. Preferably, when the elements 1, 2 are both lignocellulosic elements, lignocellulosic locking elements 4 are used. One or more of the rigid locking elements 4 can be electrically and/or thermally conducting elements. Also, one or more of the rigid locking elements 4 can be electrically insulating elements.

Each of the friction enhancing locking elements 4 can have various shapes, for example regularly and/or irregularly, as follows from Fig. 3. Locking elements 4 can be applied that all have the same shape, and the same dimensions. Also, mutually different locking elements 4 can be used, for example having different shapes and/or different dimensions.

The locking elements 4 can be relatively small, compared to the dimensions of the elements 1, 2. For example, each locking element 4 can have a cross-section measured in parallel with the respective contact surfaces 1a, 2a that is at least ten times smaller than the surface area of the respective contact surfaces 1a, 2a, for example at least fifty times smaller than the surface area of the respective contact surfaces 1a, 2a.

Alternatively, for example, each locking element 4 can have a cross-section measured in parallel with the respective contact surfaces 1a, 2a that is in the range of about half the surface area of the respective contact surfaces 1a, 2a to a tenth of that surface area.

Also, for example, in a non-limiting embodiment, a maximum size of each of the locking elements 4 can be 1 mm, particularly 0.5 mm. Alternatively, a maximum size of each of the locking elements 4 can be larger than 1 mm, for example about 4 mm or larger.

Besides, for example, a minimum size of each of the friction enhancing elements can be 0.1 mm, for example about 0.4 mm, or smaller than 0.1 mm, for example a minimum size of 0.01 mm.

In a further preferred embodiment, the rigid locking elements 4 can have a hardness that is higher than the hardness of at least one (for example each) of the two elements 1, 2 (at least at a respective contact surface of the element 1, 2). For example, a difference in hardness between a locking element's hardness and the hardness of a main element 1, 2 can be at least one, measured on the hardness scale of Mohs (commonly known).

Alternatively, the rigid locking elements 4 can have a hardness that is about the same as the hardness of at least one (for example each) of the two elements 1, 2 (at least at a respective contact surface of the element 1, 2).

As follows from Fig. 3, according to an embodiment, at least some of the locking elements 4 may indent at least one (for example both) of the two elements 1, 2 at respective contact surfaces, to be at least partly embedded in the element(s) 1, 2. As a result, a firm mechanical locking can be achieved.

The locking may be achieved by application of the locking elements 4 between the main elements 1, 2, and by bringing the elements 1, 2 towards each other in a first direction R (such as in Fig 4). In that case, the elements 1, 2 may be positioned such that their contact surfaces extend substantially in at least one second direction that differs from said first direction R (for example a second direction that includes an angle with said first direction R, for example but not limited to an angle in the range of 10 to 80 degrees). In an alternative embodiment, during movement of the elements 1, 2 towards each other, the elements 1, 2 may be positioned such that their contact surfaces extend at least partly in said first direction R.

At least some of the hard, rigid locking elements 4 can be forced (for example substantially normally) into both contact surfaces 1a, 2a of the elements 1, 2 by pressing the surfaces together. Fig. 3 shows an example of a resulting product, the hard locking elements 4 having been pressed into both contact surfaces 1a, 2a, and showing a glue line of adhesive 3 between the elements (the adhesive providing a final connecting force after curing). Since the locking elements 4 are harder than the elements 1, 2 at their contact surfaces, the locking elements 4 (of the present example) as such have not, or substantially not, been deformed during the pressing step. This contrary to the two locally indented contact surfaces 1a, 2a. In the example, locking elements 4 can partly reach into each of the elements 1, 2 (without entirely penetrating the element), see Fig. 3. Thus, from the drawing it follows that the present elements 4 are thicker than the adhesive's glue line thickness. Also or alternatively, one or more of the elements 4 can have other dimensions, for example one or more elements 4 having a thickness that is about the same as or smaller than the adhesive's glue line thickness.

In a further embodiment, at least some of the hard rigid locking elements 4 can deform during the pressing step. In that case, still, deformed rigid locking elements can reach into at least one of the contact surfaces 1a, 1b for locking the elements 1, 2.

In one embodiment, the locking elements 4 are applied simultaneously with application of the adhesive 3. For example, the locking elements 4 can be mixed in the curable adhesive 3 before the adhesive is being applied. Alternatively, for example, the curable adhesive 3 can be applied to at least one contact surface 1a, 2a of the main elements 1, 2, after which the friction enhancing elements 4 are applied (for example to the adhesive 3).

Also, for example, a bonding medium can be used to bond the locking elements 4 to at least one of the contact surfaces 1a, 2a. Said curable adhesive 3 can be the bonding medium. Alternatively, a dedicated bonding medium can be applied, different from the curable adhesive 3.

### Example

An experiment was carried out, wherein two hardwood elements 1, 2, having a configuration as shown in Fig. 1, 2 were finger jointed to each other by a method according to the invention. A curable epoxide glue was applied, wetting the contact surfaces 1a, 2a, for bonding the elements 1, 2 to each other. Also, in experiments, a polyurethane glue was used. Locking elements 4, consisting of small ground hardwood parts, had been applied to the glue as well. In the experiment, a minimum dimension of the parts was 0.4 mm, and a maximum dimension 1 mm.

After application of the glue and the hardwood parts, the elements 1, 2 were pressed onto each other (as in Fig. 4). It has been found that as a result, the elements 1, 2 were locked together, and could be jointly transported to another location, before the glue was allowed to develop handling strength. Also, after further inspection of a bonding line between the elements, it was found that the hardwood parts had been pressed into each of the two wooden elements, leading to the locking effect.

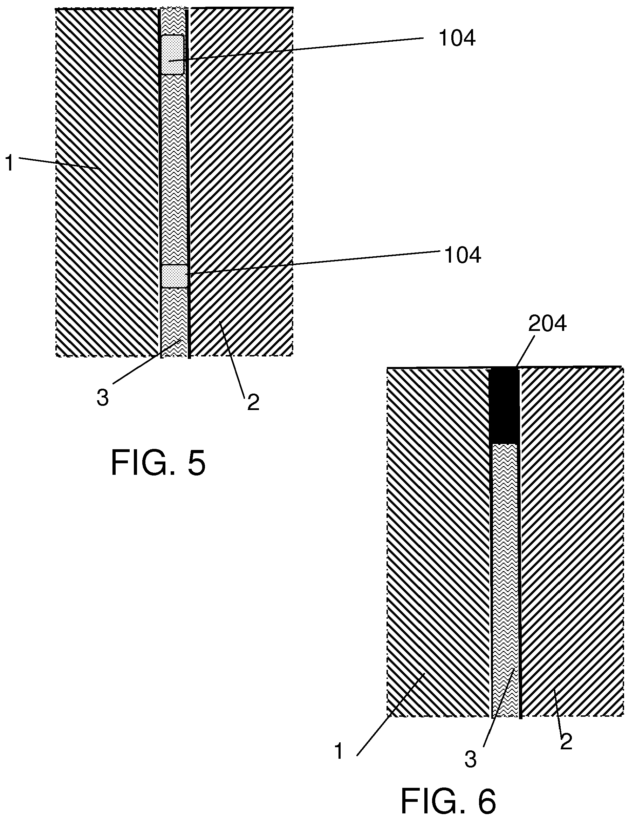

The present invention is not limited to application of rigid, hard locking elements. According to an alternative embodiment, the friction enhancing means can include resilient locking elements 104, for example elastic particles. This is shown in Figure 5. The resilient locking elements 104 are used in addition to the above-mentioned locking elements 4, and can provide an internal clamping force between the two elements 1, 2 when they are pressed together. For example, when the elements 1, 2 are both lignocellulosic elements, resilient lignocellulosic elements 4 can be used, for example elements made of softwood.

Also, the friction enhancing means can include adhesive dispersing elements, for example breakable adhesive containing elements, for locally dispersing a second adhesive between the elements 1, 2 when they are pressed onto each other. The second adhesive has a different composition than a composition of the (main) curable adhesive 3. The second adhesive can be configured to cure (and to locally connect the two elements 1, 2 to each other) before curing the curable adhesive 3. Such adhesive dispersing/containing elements are used in addition to the above-mentioned locking elements 4. For example, in a non-limiting embodiment, the second adhesive can be configured to cure within about one to five minutes or faster, for example within 10 seconds (such as one to five seconds).

The second adhesive can achieve a first (relatively) connecting force to hold the elements 1, 2 together, after which the main adhesive 3 can be cured to provide a final connecting force (being significantly higher than the first connecting force).

Figure 6 shows a further alternative embodiment, which differs from the above-mentioned examples in that the friction enhancing means includes a second adhesive 204 which may cure (and locally connect the two elements 1, 2 to each other) before curing the curable adhesive 3, at least part of the second adhesive being applied at a different location between the surfaces than the curable adhesive 3.

The present invention provides various advantages, such as achieving improved bonding of the elements, strong and reliable bonds, and higher throughput of a system 20 for pressing the elements together. Moreover, the invention is well suited for interconnecting hardwood elements, using a suitable adhesive, wherein the friction enhancing means can prevent slipping the elements from each other after the adhesive has been applied there-between. Optionally, the friction enhancing means 4, 104, 204 as such may serve as spacer means as well, for holding the opposite bonding surfaces 1a, 2a of the elements 1, 2 at a certain (small) glue line receiving space from each other.

It is to be understood that in the present application, the term "comprising" does not exclude other elements or steps. Also, each of the terms "a" and "an" does not exclude a plurality. Any reference sign(s) in the claims shall not be construed as limiting the scope of the claims.

For example, according to a further embodiment, one or both elements can be made of a metal or alloy.

Besides, according to a further embodiment, each element can be made of a magnetically attractable material. In that case, good results are expected by application of friction enhancing means that are configured to enhance friction using magnetic force (for example friction enhancing means consisting of or including magnetic parts).

Also, the method can include connecting two parts to form a composite element K, or more than two parts. In case the element K, to be manufactured, contains more than two parts, for example, the method can include joining the parts when they are all moist, wherein spaced-apart bonding surfaces are provided between all the parts, to be connected using a respective glue layer. Besides, a method for joining a plurality of parts can involve a sequence of gluing two parts to provide a composite element, and subsequently gluing a further part to the resulting composite element, until a desired number of parts has been joined together.

Besides, the pressing together of the elements 1, 2 can be achieved in various ways, for example by a system 20 that is specifically adapted to apply such a pressure, or in a different manner, for example by manual pressure.

## Claims

1. A method for joining at least two elements (1, 2), for example solid wood parts, the elements (1, 2) having at least partly mating contact surfaces (1a, 2a) that are to be connected to each other, the mating contact surfaces being provided by mating projections and cavities of opposite sides of the elements (1, 2), wherein a curable adhesive (3) is applied to secure the contact surfaces to each other, wherein friction enhancing means (4) are applied between said contact surfaces for enhancing friction after the application of the adhesive, wherein the friction enhancing means include rigid locking elements (4), the rigid locking elements (4) including rigid particles (4), wherein at least some of the rigid locking elements (4) are forced into at least one contact surface by pressing the contact surfaces together.

2. The method according to claim 1, wherein a minimum size of each of the locking elements (4) is 0.01 mm.

3. The method according to claim 1 or 2, wherein a maximum size of each of the locking elements (4) is 4 mm.

4. The method according to any of the preceding claims, wherein the curable adhesive (3) is applied before the friction enhancing means (4) are applied.

5. The method according to any of the preceding claims, wherein the joined elements (1, 2) are transported from a first location to a second location after the friction enhancing means have been applied to lock the elements (1, 2) to each other and before the curable adhesive (3) has been cured, wherein the elements (1, 2) are subjected to at least one treatment step at the second location.

6. The method according to claim 5, wherein the treatment step is a curing and/or drying step.

7. The method according to any of the preceding claims, wherein the friction enhancing means are rigid friction enhancing elements having a hardness that is equal to or higher than a hardness of at least one of the elements (1, 2) that are to be joined.

8. The method according to any of the preceding claims, wherein the contact surfaces are surfaces of a finger joint structure.

9. The method according to any of the preceding claims, wherein the friction enhancing means do not melt during the pressing together of the contact surfaces or during the curing of the curable adhesive.

10. The method according to any of the preceding claims, wherein at least some of the rigid locking elements (4) are forced into both contact surfaces (1a, 2a) of the elements (1, 2) by pressing the surfaces together.

11. A method according to any of the preceding claims, wherein the friction enhancing means include:
- locking elements that are made of lignocellulosic material, for example hardwood material; and/or
- rigid locking elements that are made of stone or stone-like material, for example sand.

12. A method according to any of the preceding claims, wherein a clamping force or pressure is applied for joining the elements after the curable adhesive and the friction enhancing means (4) have been applied, wherein the a clamping force or pressure is released when the elements are held in said joined position and before curing of the curable adhesive.

13. An assembly of at least two elements (1, 2), for example provided by a method according to any of the preceding claims, the elements (1, 2) having opposite mating contact surfaces, the contact surfaces being provided by mating projections and cavities of opposite sides of the elements (1, 2), the contact surfaces being connected by an adhesive, wherein rigid locking elements (4) are provided between the contact surfaces in addition to said adhesive, wherein the rigid locking elements (4) include rigid particles (4), wherein at least some of the locking elements (4) reach into at least one of the contact surfaces.

14. The assembly according to claim 13 wherein at least some of the locking elements (4) reach into both contact surfaces.

15. The assembly according to claim 13 or 14, wherein a minimum size of each of the locking elements (4) is 0.01 mm, or 0.1 mm, for example 0.4 mm, wherein a maximum size of each of the locking elements (4) is 4 mm, particularly 1 mm.

## Patentansprüche

1. Verfahren zum Verbinden von mindestens zwei Elementen (1, 2), zum Beispiel feste Holzteile, welche Elemente (1, 2) mindestens teilweise zusammenpassende Kontaktoberflächen (1a, 2a) aufweisen, die miteinander zu verbinden sind, welche zusammenpassende Kontaktoberflächen mit zusammenpassenden Vorsprüngen und Hohlräumen auf gegenüberliegenden Seiten der Elemente (1, 2) versehen sind, wobei ein härtbarer Klebstoff (3) angewendet wird, um die Kontaktoberflächen aneinander zu befestigen, wobei reibungsverbessernde Mittel (4) zwischen den Kontaktoberflächen angewendet werden, um Reibung nach dem Anbringen des Klebstoffs zu verbessern, wobei die reibungsverbessernden Mittel starre Verriegelungselemente (4) umfassen, welche starren Verriegelungselemente (4) starre Partikel (4) umfassen, wobei mindestens einige der starren Verriegelungselemente (4) durch Zusammendrücken der Kontaktoberflächen in mindestens eine Kontaktoberfläche gezwungen werden.

2. Verfahren nach Anspruch 1, wobei eine Mindestgröße von jedem der Verriegelungselemente (4) 0,01 mm beträgt.

3. Verfahren nach Anspruch 1 oder 2, wobei eine Maximalgröße von jedem der Verriegelungselemente (4) 4 mm beträgt.

4. Verfahren nach einem der vorhergehenden Ansprüche, wobei der härtbare Klebstoff (3) angewendet wird, bevor die reibungsverbessernden Mittel (4) angewendet werden.

5. Verfahren nach einem der vorhergehenden Ansprüche, wobei die verbundenen Elemente (1, 2) von einem ersten Ort zu einem zweiten Ort transportiert werden, nachdem die reibungsverbessernden Mittel zum Verriegeln der Elemente (1, 2) aneinander angewendet wurden und bevor der härtbare Klebstoff (3) gehärtet wurde, wobei die Elemente (1, 2) mindestens einem Behandlungsschritt an dem zweiten Ort unterzogen werden.

6. Verfahren nach Anspruch 5, wobei der Behandlungsschritt ein Härtungs- und/oder Trocknungsschritt ist.

7. Verfahren nach einem der vorhergehenden Ansprüche, wobei die reibungsverbessernden Mittel starre reibungsverbessernde Elemente sind, mit einer Härte, die gleich oder höher ist als eine Härte von mindestens einem der zu verbindenden Elemente (1,2).

8. Verfahren nach einem der vorhergehenden Ansprüche, wobei die Kontaktoberflächen Oberflächen einer Fingergelenkstruktur sind.

9. Verfahren nach einem der vorhergehenden Ansprüche, wobei die reibungsverbessernden Mittel beim Zusammenpressen der Kontaktoberflächen oder beim Härten des härtbaren Klebstoffs nicht schmelzen.

10. Verfahren nach einem der vorhergehenden Ansprüche, wobei mindestens einige der starren Verriegelungselemente (4) durch Zusammendrücken der Oberflächen in beide Kontaktoberflächen (1a, 2a) der Elemente (1, 2) gezwungen werden.

11. Verfahren nach einem der vorhergehenden Ansprüche, wobei die reibungsverbessernden Mittel Folgendes umfassen:
- Verriegelungselemente, die aus Lignozellulosematerial, z. B. Hartholzmaterial, hergestellt sind; und/oder
- starre Verriegelungselemente, die aus Steinmaterial oder steinähnlichem Material, zum Beispiel Sand, hergestellt sind.

12. Verfahren nach einem der vorhergehenden Ansprüche, wobei eine Klemmkraft oder ein Klemmdruck angewendet wird, um die Elemente zu verbinden, nachdem der härtbare Klebstoff und die reibungsverbessernden Mittel (4) anwendet wurden, wobei die Klemmkraft oder der Klemmdruck freigegeben wird, wenn die Elemente in der verbundenen Position gehalten werden und vor dem Härten des härtbaren Klebstoffs.

13. Anordnung von mindestens zwei Elementen (1, 2), zum Beispiel bereitgestellt durch ein Verfahren nach einem der vorhergehenden Ansprüche, welche Elemente (1, 2) gegenüberliegende zusammenpassende Kontaktoberflächen aufweisen, die mit zusammenpassenden Vorsprüngen und Hohlräumen auf gegenüberliegenden Seiten der Elemente (1, 2) versehen sind, welche Kontaktoberflächen durch einen Klebstoff verbunden sind, wobei starre Verriegelungselemente (4) zwischen den Kontaktoberflächen zusätzlich zu dem Klebstoff bereitgestellt werden, wobei die starren Verriegelungselemente (4) starre Partikel (4) umfassen, wobei mindestens einige der Verriegelungselemente (4) in mindestens eine der Kontaktoberflächen reichen.

14. Anordnung nach Anspruch 13, wobei mindestens einige der Verriegelungselemente (4) in beide Kontaktoberflächen reichen.

15. Anordnung nach Anspruch 13 oder 14, wobei eine Mindestgröße von jedem der Verriegelungselemente (4) 0,01 mm oder 0,1 mm beträgt, zum Beispiel 0,4 mm, wobei eine Maximalgröße von jedem der Verriegelungselemente (4) 4 mm, insbesondere 1 mm, beträgt.

## Revendications

1. Méthode pour réunir au moins deux éléments (1, 2), par exemple des pièces de bois massif, les éléments (1, 2) ayant des surfaces de contact au moins partiellement d'appariement (1a, 2a) qui doivent être reliées l'une à l'autre, les surfaces de contact d'appariement étant fournies par des saillies et cavités d'appariement de côtés opposés des éléments (1, 2), dans laquelle un adhésif durcissable (3) est appliqué pour fixer les surfaces de contact l'une à l'autre, dans laquelle des moyens d'amélioration de frottement (4) sont appliqués entre lesdites surfaces de contact pour améliorer le frottement après l'application de l'adhésif, dans laquelle les moyens d'amélioration de frottement comprennent des éléments de verrouillage rigides (4), les éléments de verrouillage rigides (4) comprenant des particules rigides (4), dans laquelle au moins certains des éléments de verrouillage (4) sont poussés dans au moins une surface de contact en pressant les surfaces de contact ensemble.

2. Méthode selon la revendication 1, dans laquelle une taille minimum de chacun des éléments de verrouillage (4) est de 0,01 mm.

3. Méthode selon la revendication 1 ou 2, dans laquelle une taille maximum de chacun des éléments de verrouillage (4) est de 4 mm.

4. Méthode selon l'une quelconque des revendications précédentes, dans laquelle l'adhésif durcissable (3) est appliqué avant que les moyens d'amélioration de frottement (4) soient appliqués.

5. Méthode selon l'une quelconque des revendications précédentes, dans laquelle les éléments réunis (1, 2) sont transportés d'un premier emplacement vers un second emplacement après que les moyens d'amélioration de frottement aient été appliqués pour verrouiller les éléments (1, 2) l'un à l'autre, et avant que l'adhésif durcissable (3) soit durci, dans laquelle les éléments (1, 2) sont soumis à au moins une étape de traitement au niveau du second emplacement.

6. Méthode selon la revendication 5, dans laquelle l'étape de traitement est une étape de durcissement et/ou séchage.

7. Méthode selon l'une quelconque des revendications précédentes, dans laquelle les moyens d'amélioration de frottement sont des éléments d'amélioration de frottement rigides ayant une dureté qui est égale ou supérieure à une dureté d'au moins un des éléments (1, 2) qui doivent être réunis.

8. Méthode selon l'une quelconque des revendications précédentes, dans laquelle les surfaces de contact sont des surfaces d'une structure de joint par entures multiples.

9. Méthode selon l'une quelconque des revendications précédentes, dans laquelle les moyens d'amélioration de frottement ne fondent pas pendant que les surfaces de contact sont pressées ensemble, ou pendant le durcissement de l'adhésif durcissable.

10. Méthode selon l'une quelconque des revendications précédentes, dans laquelle au moins certains des éléments de verrouillage rigides (4) sont forcés dans deux surfaces de contact (1a, 2a) des éléments (1, 2) en pressant les surfaces ensemble.

11. Méthode selon l'une quelconque des revendications précédentes, dans laquelle les moyens d'amélioration de frottement comprennent :
- des éléments de verrouillage qui sont constitués d'un matériau lignocellulosique, par exemple un matériau de bois dur ; et/ou
- des éléments de verrouillage rigides qui sont réalisés en pierre ou en un matériau analogue à la pierre, par exemple du sable.

12. Méthode selon l'une quelconque des revendications précédentes, dans laquelle une force de serrage ou une pression est appliquée pour réunir les éléments après que l'adhésif durcissable et les moyens d'amélioration de frottement (4) aient été appliqués, dans laquelle une force de serrage ou une pression est libérée lorsque les éléments sont maintenus dans ladite position réunie et avant durcissement de l'adhésif durcissable.

13. Assemblage d'au moins deux éléments (1, 2), par exemple fourni par un procédé selon l'une quelconque des revendications précédentes, les éléments (1, 2) ayant des surfaces de contact d'appariement opposées, les surfaces de contact étant fournies par des saillies et cavités de côtés opposés des éléments (1, 2), les surfaces de contact étant reliées par un adhésif, dans lequel des éléments de verrouillage rigides (4) sont fournis entre les surfaces de contact en plus dudit adhésif, dans lequel les éléments de verrouillage rigides (4) comprennent des particules rigides (4), dans lequel au moins certains des éléments de verrouillage (4) entrent dans au moins une des surfaces de contact.

14. Assemblage selon la revendication 13, dans lequel au moins certains des éléments de verrouillage (4) entrent dans les deux surfaces de contact.

15. Assemblage selon la revendication 13 ou 14, dans lequel une taille minimum de chacun des éléments de verrouillage (4) est de 0,01 mm, ou 0,1 mm, par exemple 0,4 mm, dans lequel une taille maximum de chacun des éléments de verrouillage (4) est de 4 mm, en particulier de 1 mm.
